(19) Europäisches Patentamt
European Patent Office
Office européen des brevets

(11) **EP 3 774 167 B1**

(12) **EUROPÄISCHE PATENTSCHRIFT**

(45) Veröffentlichungstag und Bekanntmachung des Hinweises auf die Patenterteilung:
**16.04.2025   Patentblatt 2025/16**

(21) Anmeldenummer: **19708284.5**

(22) Anmeldetag: **27.02.2019**

(51) Internationale Patentklassifikation (IPC):
$C22C\ 38/28^{(2006.01)}$    $C23C\ 2/12^{(2006.01)}$
$C22C\ 38/32^{(2006.01)}$    $B23K\ 26/24^{(2014.01)}$
$B23K\ 26/322^{(2014.01)}$    $C22C\ 38/14^{(2006.01)}$
$C23C\ 30/00^{(2006.01)}$    $C22C\ 38/18^{(2006.01)}$
$C22C\ 38/24^{(2006.01)}$    $B23K\ 26/323^{(2014.01)}$
$C22C\ 38/38^{(2006.01)}$    $C22C\ 38/22^{(2006.01)}$
$C22C\ 38/04^{(2006.01)}$    $C22C\ 38/06^{(2006.01)}$
$C22C\ 38/12^{(2006.01)}$    $C22C\ 38/02^{(2006.01)}$
$B23K\ 35/02^{(2006.01)}$    $B23K\ 35/30^{(2006.01)}$
$B21D\ 22/02^{(2006.01)}$    $B21D\ 35/00^{(2006.01)}$

(52) Gemeinsame Patentklassifikation (CPC):
**B23K 35/0227; B23K 26/24; B23K 26/322; B23K 26/323; B23K 35/0261; B23K 35/308; B23K 35/3086; B32B 15/012; C21D 1/18; C21D 6/002; C21D 6/004; C21D 6/005; C21D 6/008; C21D 8/0247; C21D 8/0447;** (Forts.)

(86) Internationale Anmeldenummer:
**PCT/EP2019/054890**

(87) Internationale Veröffentlichungsnummer:
**WO 2019/185272 (03.10.2019 Gazette 2019/40)**

(54) **VERFAHREN ZUM SCHWEISSEN BESCHICHTETER STAHLBLECHE**

METHOD OF WELDING COATED STEEL SHEETS

PROCÉDÉ DE SOUDAGE DE PLAQUES D'ACIER REVETUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **27.03.2018   DE 102018107291**

(43) Veröffentlichungstag der Anmeldung:
**17.02.2021   Patentblatt 2021/07**

(73) Patentinhaber: **Voestalpine Automotive Components Linz GmbH**
**4020 Linz (AT)**

(72) Erfinder: **BRUGGER, Gerald**
**4020 Linz (AT)**

(74) Vertreter: **WSL Patentanwälte Partnerschaft mbB**
**Kaiser-Friedrich-Ring 98**
**65185 Wiesbaden (DE)**

(56) Entgegenhaltungen:
EP-A1- 2 832 887    EP-A1- 2 832 887
WO-A1-2017/103149    WO-A1-2017/103149
US-A1- 2017 232 560

• **UCHIHARA ET AL: "Joining technologies for automotive steel sheets", WELDING INTERNATIONAL, TAYLOR & FRANCIS, ABINGDON, GB, vol. 25, no. 4, 1 April 2011 (2011-04-01), pages 249 - 259, XP001560744, ISSN: 0950-7116, [retrieved on 20110401], DOI: 10.1080/09507111003655341**
• **GERMANY W NR: "DISCLAIMER STAINLESS STEEL -431 RELATED SPECIFICATIONS", 31 December 2009 (2009-12-31), XP055577064, Retrieved from the Internet <URL:http://www.globalmetals.com.au/_pdf/Stainless_Steel/Stainless_Steel_431.pdf> [retrieved on 20190403]**

- PETER P ALEXANDER GREGER NORMAN JANIAK KAPLAN WIKLUND ET AL: "Comparison of 22MnB5-steel with and without AlSi-coating during laser hybrid arc welding", 13TH NOLAMP CONFERENCE, 1 January 2011 (2011-01-01), XP055113860, Retrieved from the Internet <URL:http://pure.ltu.se/portal/sv/publications/comparison-of-22mnb5steel-with-and-without-alsicoating-during-laser-hybrid-arc-welding (6484da26-5cc8-4a4d-a396-71c2075c000d).html>
- T. TAYLOR ET AL: "Critical review of automotive hot-stamped sheet steel from an industrial perspective", MATERIALS SCIENCE AND TECHNOLOGY, vol. 34, no. 7, 18 January 2018 (2018-01-18), GB, pages 809 - 861, XP055711575, ISSN: 0267-0836, DOI: 10.1080/02670836.2018.1425239
- UCHIHARA ET AL: "Joining technologies for automotive steel sheets", WELDING INTERNATIONAL, TAYLOR & FRANCIS, ABINGDON, GB, vol. 25, no. 4, 1 April 2011 (2011-04-01), pages 249 - 259, XP001560744, ISSN: 0950-7116, [retrieved on 20110401], DOI: 10.1080/09507111003655341
- GERMANY W NR: "DISCLAIMER STAINLESS STEEL -431 RELATED SPECIFICATIONS", 31 December 2009 (2009-12-31), XP055577064, Retrieved from the Internet <URL:http://www.globalmetals.com.au/_pdf/Stainless_Steel/Stainless_Steel_431.pdf> [retrieved on 20190403]

(52) Gemeinsame Patentklassifikation (CPC): (Forts.)
**C21D 9/50; C22C 38/02; C22C 38/04; C22C 38/06; C22C 38/12; C22C 38/14; C22C 38/18; C22C 38/22; C22C 38/24; C22C 38/28; C22C 38/32; C22C 38/38; C23C 2/12; C23C 30/00;** B21D 22/02; B21D 35/006; B23K 2101/34; B23K 2103/04; B23K 2103/10; B23K 2103/20

**Beschreibung**

Die vorliegende Erfindung betrifft ein Verfahren zum Schweißen beschichteter Stahlbleche nach dem Oberbegriff des Anspruchs 1.

Im Stand der Technik ist es bekannt, aus Stahlblechen unterschiedlicher Dicke und/oder Stahlblechen mit unterschiedlicher Zusammensetzung geschweißte Platinen herzustellen, die dann einer Weiterverarbeitung, wie einer Umformung oder Wärmebehandlung zugänglich sind.

Der Sinn hierhinter ist, dass durch die unterschiedliche Dicke oder die unterschiedliche Zusammensetzung Eigenschaften eines fertigen umgeformten Bauteils zonal unterschiedlich gestaltet werden können.

Darüber hinaus ist es bekannt, auch Bleche zu verschweißen, die eine Korrosionsschutzbeschichtung, und insbesondere eine metallische Korrosionsschutzbeschichtung wie eine Zink- oder Aluminiumbeschichtung besitzen.

Es ist insbesondere bekannt, hochhärtbare Mangan-Bor-Stähle miteinander zu verschweißen, aus welchen anschließend Strukturbauteile von Karosserien hergestellt werden.

Derart maßgeschneiderte Platinen aus Stahlblechen werden auch als "tailored blanks" bezeichnet.

Bekannte Schweißverfahren sind das Lichtbogenschweißen und das Laserschweißen sowie das Laserlichtbogen-Hybridschweißverfahren.

Insbesondere bei aluminium-siliziumbeschichteten Blechen hat sich herausgestellt, dass die Aluminium-Siliziumschicht, wenn sie mit den herkömmlichen Schweißverfahren in das Verschweißen der Bleche involviert ist, Probleme bereitet. Offensichtlich haben die Beschichtungselemente einen negativen Einfluss auf die Zusammensetzung der Schweißnaht.

Es gibt daher Ansätze, Aluminium-Siliziumschichten vor dem Schweißen teilbereichsweise zu entfernen, um die Aluminium-Siliziumkonzentration in der Schweißnaht abzusenken.

Zudem ist aus dem Stand der Technik bekannt, bei einem Verschweißen derartig beschichteter Bleche mit einem Zusatzdraht zu arbeiten oder mit einer Pulverzugabe.

Derartige verschweißte Platinen werden auch bei der Herstellung von gehärteten oder teilgehärteten Bauteilen verwendet und dazu aufgeheizt und abgeschreckt.

Es ist bekannt, dass insbesondere in Automobilen sogenannte pressgehärtete Bauteile aus Stahlblech eingesetzt werden. Diese pressgehärteten Bauteile aus Stahlblech sind hochfeste Bauteile, die insbesondere als Sicherheitsbauteile des Karosseriebereichs verwendet werden. Hierbei ist es durch die Verwendung dieser hochfesten Stahlbauteile möglich, die Materialdicke gegenüber einem normalfesten Stahl zu reduzieren und somit geringe Karosseriegewichte zu erzielen.

Beim Presshärten gibt es grundsätzlich zwei verschiedene Möglichkeiten zur Herstellung derartiger Bauteile. Unterschieden wird in das sogenannte direkte und indirekte Verfahren.

Beim direkten Verfahren wird eine Stahlblechplatine über die sogenannten Austenitisierungstemperatur aufgeheizt und gegebenenfalls so lange auf dieser Temperatur gehalten, bis ein gewünschter Austenitisierungsgrad erreicht ist. Anschließend wird diese erhitzte Platine in ein Formwerkzeug überführt und in diesem Formwerkzeug in einem einstufigen Umformschritt zum fertigen Bauteil umgeformt und hierbei durch das gekühlte Formwerkzeug gleichzeitig mit einer Geschwindigkeit, die über der kritischen Härtegeschwindigkeit liegt, abgekühlt. Somit wird das gehärtete Bauteil erzeugt.

Beim indirekten Verfahren wird zunächst, gegebenenfalls in einem mehrstufigen Umformprozess, das Bauteil fast vollständig fertig umgeformt. Dieses umgeformte Bauteil wird anschließend ebenfalls auf eine Temperatur über die Austenitisierungstemperatur erhitzt und gegebenenfalls für eine gewünschte erforderliche Zeit auf dieser Temperatur gehalten.

Anschließend wird dieses erhitzte Bauteil in ein Formwerkzeug überführt und eingelegt, welches schon die Abmessungen des Bauteils bzw. die Endabmessungen des Bauteils gegebenenfalls unter Berücksichtigung der Wärmedehnung des vorgeformten Bauteils besitzt. Nach dem Schließen des insbesondere gekühlten Werkzeuges wird somit das vorgeformte Bauteil lediglich in diesem Werkzeug mit einer Geschwindigkeit über der kritischen Härtegeschwindigkeit abgekühlt und dadurch gehärtet.

Das direkte Verfahren ist hierbei etwas einfacher zu realisieren, ermöglicht jedoch nur Formen, die tatsächlich mit einem einzigen Umformschritt zu realisieren sind, d.h. relativ einfache Profilformen.

Das indirekte Verfahren ist etwas aufwendiger, dafür aber in der Lage auch komplexere Formen zu realisieren.

Aus der DE 10 2012 111 118 B3 ist ein Verfahren zum Laserschweißen eines oder mehrerer Werkstücke aus presshärtbarem Stahl, insbesondere Mangan-Bor-Stahl bekannt, bei dem im Stumpfstoß geschweißt wird und bei dem das Werkstück oder die Werkstücke eine Dicke von mind. 1,8mm aufweisen und/oder an dem Stumpfstoß ein Dickensprung von mind. 0,4mm entsteht, wobei bei dem Laserschweißen in das mit einem Laserstrahl erzeugte Schmelzbad Zusatzdraht zugeführt wird. Um sicherzustellen, dass sich die Schweißnaht beim Warmumformen zuverlässig in ein martensitisches Gefüge aufhärten lässt, sieht diese Schrift vor, dem Zusatzdraht mind. 1 Legierungselement aus der Mangan, Chrom, Molybdän, Silizium und/oder Nickel umfassenden Gruppe zuzusetzen, dass die Bildung von Austenit in dem mit dem Laserstrahl erzeugten Schmelzbad begünstigt, wobei dieses mind. eine Legierungselement mit einem um mind. 0,1 Gewichtsprozent größeren Masseanteil im Zusatzdraht vorhanden ist als in dem presshärtbaren Stahl des Werkstückes oder der Werkstücke.

Aus der DE 10 2014 001 979 A1 ist ein Verfahren zum Laserschweißen eines oder mehrerer Werkstücke aus härtbarem Stahl im Stumpfstoß bekannt, wobei der Stahl insbesondere ein Mangan-Bor-Stahl ist und die Werkstücke eine Dicke zwischen 0,5 und 1,8mm aufweisen und/oder an dem Stumpfstoß ein Dickensprung zwischen 0,2 und 0,4 mm entsteht, wobei beim Laserschweißen in das Schmelzbad ein Zusatzdraht eingeführt wird, wobei das Schmelzbad ausschließlich durch den einen Laserstrahl erzeugt wird. Um sicherzustellen, dass sich die Schweißnaht beim Warmumformen zuverlässig in ein martenstisches Gefüge aufhärten lässt, sieht die Schrift vor, dass der Zusatzdraht mindestens ein Legierungselement aus der Mangan, Chrom, Molybdän, Silizium und/oder Nickel umfassenden Gruppe enthält, sodass die Bildung von Austenit begünstigt wird.

Aus der EP 2 737 971 A1 ist ein tailor welded blank bekannt und ein Verfahren zu seiner Herstellung, wobei das Blech dadurch erzeugt wird, dass Bleche unterschiedlicher Dicke oder

Zusammensetzung miteinander verbunden werden, wobei Qualitätsprobleme in der Schweißzone vermindert werden sollen. Auch hierbei wird ein Zusatzdraht verwendet, wobei dieser so ausgestaltet werden soll, dass im Temperaturbereich von 800 bis 950°C kein Ferrit entsteht. Dieses Verfahren soll insbesondere für AlSi-beschichtete Bleche geeignet sein, wobei auch dieser Draht einen höheren Gehalt an Austenit stabilisierenden Elementen haben soll, die insbesondere aus Kohlenstoff oder Mangan bestehen.

Aus der EP 1 878 531 B1 ist ein Verfahren zum hybriden Laser-Lichtbogen-Schweißen von oberflächig beschichteten metallischen Werkstücken bekannt, wobei die oberflächige Beschichtung Aluminium enthalten soll. Der Laserstrahl soll mit wenigstens einem Lichtbogen kombiniert sein, sodass ein Schmelzen des Metalls und ein Schweißen des oder der Teile bewirkt wird und, dass wenigstens eines der Teile vor seinem Schweißen auf der Oberfläche einen seiner seitlichen Schnittflächen die verschweißt werden soll, Ablagerungen der Beschichtung von Aluminium-Silizium aufweist.

Aus der EP 2 942 143 B1 ist ein Verfahren zum Verbinden von zwei Rohlingen bekannt, wobei die Rohlinge Stahlbleche sind mit einer Beschichtung, welche eine Schicht aus Aluminium oder aus einer Aluminiumlegierung umfassen, wobei die beiden Teile aneinandergeschweißt werden unter Nutzung eines Laserstrahls und eines Lichtbogens, wobei der Lichtbogenbrenner eine Fülldrahtelektrode umfasst und die Fülldrahtelektrode aus einer Stahllegierung umfassend stabilisierende Elemente besteht, wobei Laser und Lichtbogen in einer Schweißrichtung bewegt werden, wobei in Schweißrichtung der Lichtbogenschweißbrenner und der Laserstrahl nachfolgend angeordnet sind.

Aus der EP 2 883 646 B1 ist ein Verfahren zum Verbinden von zwei Rohlingen bekannt, wobei zumindest einer der Rohlinge eine Schicht aus Aluminium oder einer Aluminiumlegierung umfasst, wobei beim Schweißvorgang ein Metallpulver in die Schweißzone zugeführt wird und das Metallpulver ein auf Eisen basierendes Pulver umfassend gammastabilisierende Elemente ist und das Laserstrahlschweißen ein Zweipunktlaserstrahlschweißen ist.

Aus der EP 2 007 545 B1 ist ein Verfahren zur Herstellung eines geschweißten Teils mit sehr guten mechanischen Eigenschaften bekannt, wobei ein Stahlblech eine Beschichtung besitzt, die aus einer intermetallischen Schicht besteht und einer auf der intermetallischen Schicht befindlichen Metalllegierungsschicht. Zum Zwecke des Verschweißens der Bleche soll an der Peripherie des Blechs, d. h. den Bereichen, die verschweißt werden sollen, die Metalllegierungsschicht auf der intermetallischen Schicht entfernt sein, wobei es sich bei dieser Schicht um eine Aluminiumlegierungsschicht handelt. Diese Beschichtung soll durch einen Laserstrahl beseitigt sein, sodass diese als Aluminium-Siliziumschicht ausgebildete Schicht vor dem Verschweißen abgedampft wird, um schädliche Einflüsse des Aluminiums in der Schweißnaht zu vermeiden. Gleichzeitig soll die intermetallische Schicht bestehen bleiben, um möglicherweise korrosionshemmende Wirkungen zu entfalten.

Aus der US 960 43 11 B2 ist ein Vollablationsverfahren bekannt, bei dem eine metallische und eine intermetallische Schicht vollständig durch Laser verdampft werden. WO 2017/103149 A1 offenbart das Schweißen eines AlSi-beschichteten Blechs. Beim Stand der Technik ist von Nachteil, dass bei Verfahren, bei denen ein Pulver in die Schweißnaht eingebracht wird, die Dosierung des Pulvers schwer ist. Bei Laser-HybridSchweißverfahren ist von Nachteil, dass diese grundsätzlich sehr komplex sind und schwer zu führen sind. Bei einer Verzunderung der Schweißnaht ist von Nachteil, dass der tragende Querschnitt verringert wird und bei einer Entkohlung der Schweißnaht ebenfalls der tragende Querschnitt vermindert wird, zusätzlich aber auch die mechanische Tragfähigkeit der Schweißnaht in Frage gestellt wird. Bei der Ablation von Aluminium-Siliziumschichten durch Laser ist von Nachteil, dass es einerseits schwer ist, die Laserablation sicher zu fahren und zu einer zuverlässigen Ablation zu kommen, andererseits stellt ein solcher Schritt einen weiteren Verfahrensschritt dar, der die Herstellung komplexer macht und verteuert.

Grundsätzlich besteht das Problem, dass bei Aluminium-Siliziumschichten auf Blechen bei der Verschweißung die Schweißnaht weniger fest wird, was offensichtlich am Aluminium liegt, welches mit in die Schweißnaht eingetragen wird.

Aufgabe der Erfindung ist es, stabile Schweißnähte mit geringem Aufwand zu erzeugen. Die Aufgabe wird mit einem Verfahren mit den Merkmalen des Anspruchs 1 gelöst.

**EP 3 774 167 B1**

Vorteilhafte Weiterbildungen sind in Unteransprüchen gekennzeichnet.

Erfindungsgemäß werden Aluminium-Silizium-beschichtete Bleche ohne die Aluminium-Silizium-Schicht ganz oder teilweise zu entfernen miteinander verschweißt, wobei jedoch der negative Einfluss des Aluminiums auf die mechanischen Eigenschaften der Schweißverbindung neutralisiert wird. Zudem wird erfindungsgemäß der Entkohlung und Verzunderung der Schweißnaht vorgebeugt, die Warmfestigkeit der Schweißnaht gesteigert und die Schweißnaht zudem für nachfolgende Warmumformprozesse derart ertüchtigt, dass die werkzeugbedingten an der Schweißnaht herrschenden schlechteren Kühlbedingungen kompensiert wird. Für die erfindungsgemäße Neutralisierung des Aluminiums bzw. dessen negativen Wirkungen wird mit einem speziellen Zusatzdraht geschweißt, dessen Chemie bzw. Legierungslage darauf abgestimmt ist, den Wirkungen des Aluminiums entgegenzusteuern.

Insbesondere besitzt der Schweißdraht einen definierten Chromgehalt, der die Zunderbildung und die Randentkohlung stark hemmt.

Dementsprechend wird im Gegensatz zum Stand der Technik keine Gammastabilisierung vorgenommen, sondern mit wenig Nickel und Mangan geschweißt. Überraschend hat sich ergeben, dass trotzdem eine hochfeste Schweißnaht entsteht. Somit gelingt es ablationsfrei zu Schweißen und den negativen Einfluss von Aluminium auf die mechanischen Eigenschaften der Schweißverbindung zu unterdrücken, wobei zusätzlich eine Entkohlung und Verzunderung der Schweißnaht nahezu vermieden wird, die Schweißnaht bezüglich der Warmfestigkeit gesteigert wird. Dies gelingt u. a. dadurch, dass mit einem erhöhten Chromgehalt geschweißt wird, welcher die Härtbarkeit verbessert. Dies ist wichtig, weil erfindungsgemäß erkannt wurde, dass beim Warmumformprozess werkzeugbedingt an der Schweißnaht oft schlechtere Kühlbedingungen vorliegen, was sich in einem Härteabfall der Schweißnaht nach dem Presshärtevorgang widerspiegelt.

Insgesamt wird somit durch die Verwendung von einem speziell auf das Material abgestimmten Zusatzdraht das Aluminium weitgehend neutralisiert und durch den Chromgehalt in der Schweißnaht die Zunderbildung und Randentkohlung stark gehemmt. Ein geeigneter Zusatzdraht besitzt einen Kohlenstoffanteil der 0,80 bis 2,28 mal dem Kohlenstoffgehalt des Grundwerkstoffes, bevorzugt 0,88 bis 1,51 mal dem Kohlenstoffgehalt des Grundmaterials, besonders bevorzugt 0,90 bis 1,26 mal dem Kohlenstoffgehalt des Grundmaterials, Grundmaterials, noch besonderer bevorzugt 0,90 bis 1,17 mal dem Kohlenstoffgehalt des Grundmaterials entspricht, bei einem Chromgehalt von 8 bis 20%, einem Nickelgehalt unter 5%, bevorzugt unter 1%, einem Siliziumgehalt von 0,2 bis 3%, einem Mangangehalt von 0,2 bis 1% und optional einem Molybdängehalt bis 2 %, bevorzugt 0,5 bis 2%.

Beim Verschweißen mit einem solchen Zusatzdraht gelingt es, beim nachfolgenden Härteprozess Zunderbildung und Randentkohlung stark zu hemmen und die Wirkung des aus der Beschreibung stammenden Aluminiums zu "neutralisieren".

Die Erfindung wird anhand von Figuren beispielhaft erläutert. Es zeigen dabei:

Figur 1  Einen Querschnitt durch eine Schweißnaht zwischen zwei unterschiedliche dicken Blechen, wobei ein Schweißverfahren nach dem Stand der Technik angewendet wurde und eine verzunderte und entkohlte Schweißnaht zu sehen ist;

Figur 2  Die entkohlte Zone bei einer Schweißnaht nach dem Stand der Technik und eine erfindungsgemäße Schweißnaht im Querschnitt angeschliffen;

Figur 3  Der Härteverlauf innerhalb einer Schweißnaht, wobei die Schweißnaht in einer Schliffdarstellung dargestellt ist mit dem Härteprobenpunkten;

Figur 4  Eine Übersicht über das Festigkeitsniveau von Schweißnähten unterschiedlichen Spaltbreiten und unterschiedlichen erfindungsgemäßen und nicht erfindungsgemäßen Drahtmaterialien und unterschiedlichen Schweißfortschrittsgeschwindigkeiten;

Figur 5  Eine Übersicht von den Zusammensetzungen der Zusatzdrähte der in Figur 4 dargestellten Schweißnähte der erfindungsgemäßen und nicht erfindungsgemäßen Drahtmaterialien.

Erfindungsgemäß wird das Verschweißen zweier unterschiedlich dicker Bleche, bevorzugt CMn-Stähle insbesondere eines härtbaren CMnB-Stahles, insbesondere von 22MnB5-Stahlmaterialien dadurch bewerkstelligt, dass ein Schweißzusatzdraht verwendet wird. Insbesondere werden erfindungsgemäß Aluminium-Silizium-beschichtete Stahlbleche mit > 900 MPa Zugfestigkeit nach Härtung, ablationsfrei durch Schweißen gefügt.

Die bevorzugte chemische Legierung des Zusatzdrahtes bzw. Fülldrahtes besteht aus folgenden Elementen:

| C= | 0,80 - 2,28 $\times$ C Grundmaterial |
| Cr= | 8 - 20 Masse-% |
| Ni$\leq$ | 5, vorzugsweise $\leq$ 1 Masse-% |
| Si= | 0,2 - 3 Masse-% |
| Mn= | 0,2 - 1 Masse-% |

5

(fortgesetzt)

| | |
|---|---|
| Optional Mo=< | 2, vorzugsweise 0,5 - 2,5 Masse-% |

Optional V und/oder W in Summe < 1% Masse-%

Rest Eisen und erschmelzungsbedingte unvermeidliche Verunreinigungen

Bevorzugt wird der Kohlenstoff des Zusatzdrahtes bzw. Fülldrahtes wie folgt eingestellt, bzw. weist der Zusatzdraht folgende Zusammensetzung auf:

| | |
|---|---|
| C= | ( 0,88 bis 1,51 ) $\times$ C Grundmaterial |
| Cr= | 10 - 18 Masse-% |
| Ni= | $\leq$ 1 Masse-% |
| Si= | 0,3 - 1 Masse-% |
| Mn= | 0,4 - 1 Masse-% |
| Mo= | 0,5 - 1,3 Masse-% |
| V = | 0,1 - 0,5 Masse-% |
| W= | 0,1 - 0,5 Masse-% |

Rest Eisen und erschmelzungsbedingte unvermeidliche Verunreinigungen Besonders bevorzugt:

$$C= ( 0,90 \text{ bis } 1,26 ) \times C \text{ Grundmaterial}$$

Noch besonderer bevorzugt:

$$C= ( 0,90 \text{ bis } 1,17 ) \times C \text{ Grundmaterial}$$

Wie bereits ausgeführt, werden als Werkstoffe Aluminium-Silizium-beschichtete Bleche mit einer Auflage von 60g/m$^2$ je Seite aus einem 22MnB5 gefügt, wobei zum Zwecke der Zugproben, Bleche mit 1,5 mm gefügt wurden. Derartige Blechte wurden mit Schweißkanten versehen und mit einem Trumpf Schweißlaser 4006 (4,4 kW) mit einem Fokusgrößendurchmesser 0,6 mm verschweißt.

Der Grundmaterial ist ein Stahl der allgemeinen Legierungszusammensetzung (in Masse-%)

| | |
|---|---|
| Kohlenstoff (C) | 0,03-0,6 |
| Mangan (Mn) | 0,3-3,0 |
| Aluminium (Al) | 0,01-0,07 |
| Silizium (Si) | 0,01-0,8 |
| Chrom (Cr) | 0,02-0,6 |
| Nickel (Ni) | <0,5 |
| Titan (Ti) | 0,01-0,08 |
| Niob (Nb) | <0,1 |
| Stickstoff (N) | < 0,02 |
| Bor (B) | 0,002-0,02 |
| Phosphor (P) | < 0,01 |
| Schwefel (S) | < 0,01 |
| Molybdän (Mo) | < 1 |

Rest Eisen und erschmelzungsbedingte Verunreinigungen.

Dies bedeutet, dass der Kohlenstoffgehalt des Zusatzdrahtes im Bereich von 0,024 bis 1,086 Masse-% liegen kann.

In der Produktion wird selbstverständlich der Kohlenstoffgehalt des Zusatzdrahtes konkret auf Basis Kohlenstoffgehalts des vorliegenden Grundmaterials ausgewählt.

Bevorzugt kann der Grundmaterials folgende Legierungszusammensetzung aufweisen:

| | |
|---|---|
| Kohlenstoff (C) | 0,03-0,36 |
| Mangan (Mn) | 0,3-2,00 |
| Aluminium (Al) | 0,03-0,06 |
| Silizium (Si) | 0,01-0,20 |
| Chrom (Cr) | 0,02-0,4 |
| Nickel (Ni) | <0,5 |
| Titan (Ti) | 0,03-0,04 |
| Niob (Nb) | <0,1 |
| Stickstoff (N) | < 0,007 |
| Bor (B) | 0,002-0,006 |
| Phosphor (P) | < 0,01 |
| Schwefel (S) | < 0,01 |
| Molybdän (Mo) | < 1 |

Rest Eisen und erschmelzungsbedingte Verunreinigungen.

Konkret kann z.B. der 22MnB5 folgende Zusammensetzung aufweisen:

C=0,22
Si=0,19
Mn=1,22
P=0,0066
S=0,001
Al=0,053
Cr=0,26
Ti=0,031
B=0,0025
N=0,0042,

Rest Eisen und schmelzungsbedingte Verunreinigungen, wobei alle Angaben in Masse-% sind.

Bei dieser konkreten Zusammensetzung des Grundmaterials kann der Kohlenstoffgehalt des Zusatzdrahtes im Bereich zwischen 0,216 bis 0,257 Masse-% liegen.

Im Rahmen der Versuche wurden die Prozessparameter wie folgt variiert:

» Schweißlaser Trumpf 4006 4,4 kW (Fokusgröße Ø=0,6mm)
» Variation Prozessparameter:

» $v_w$ = 4 - 7,5 m/min
» $V_d$ = 2,3 - 6,4 m/min
» Spalt=0 / 0,1 mm

» Härtung

» Ofentemperatur: 930°C
» Ofenverweilzeit: 310 sec
» Transferzeit: ca 6 sec
» Wassergekühltes Plattenwerkzeug

Wobei $v_w$ die Schweißfortschrittsgeschwindigkeit und $V_d$ die Drahtzuführgeschwindigkeit definiert.

Die Härtung der Proben erfolgte nachfolgend bei 930°C Ofentemperatur und einer Ofenverweilzeit von 310 Sekunden. Die Transferzeit zwischen Ofenherausnahme und Einfügen in ein wassergekühltes Plattenwerkzeug lag bei 6 Sekunden.

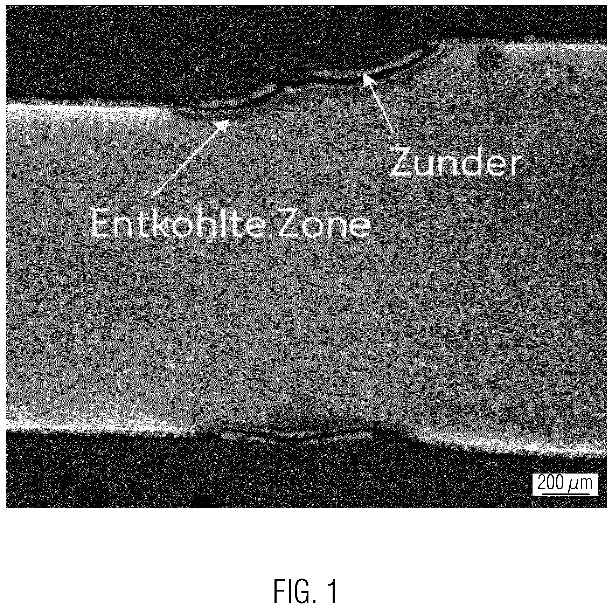

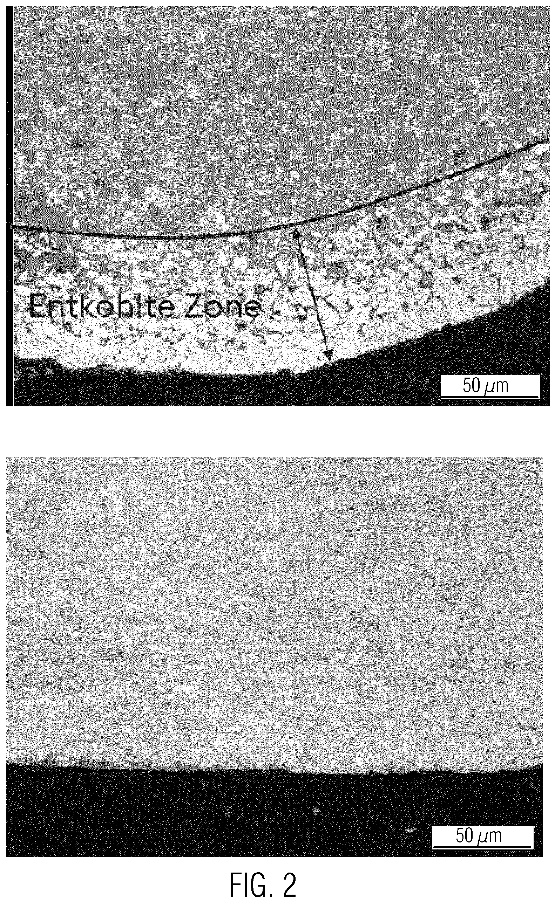

Nach dem Verschweißen mit erfindungsgemäßen Schweißdrähten ergeben sich Schweißnähte gemäß Figur 2 unten. Man erkennt ein homogenes Gefüge ohne eine entkohlte Zone wie in Figur 2 oben, welche eine Schweißnaht nach dem Stand der Technik zeigt. Eine solche Schweißnaht nach dem Stand der Technik ist auch in Figur 1 zu erkennen, bei der eine deutliche Verzunderung und eine darunterliegende entkohlte Zone sichtbar sind. Die Verzunderung der Schweißnaht verringert den tragenden Querschnitt und die Entkohlung der Schweißnaht verringert ebenfalls den tragenden Querschnitt, so dass die Zugproben in diesem Fall im Bereich der Schweißnaht reißen. Ziel muss es jedoch sein, dass die Zugproben nicht in der Schweißnaht reißen, sondern im Grundmaterial, so dass sichergestellt ist, dass das Grundmaterial die mechanischen Eigenschaften bestimmt.

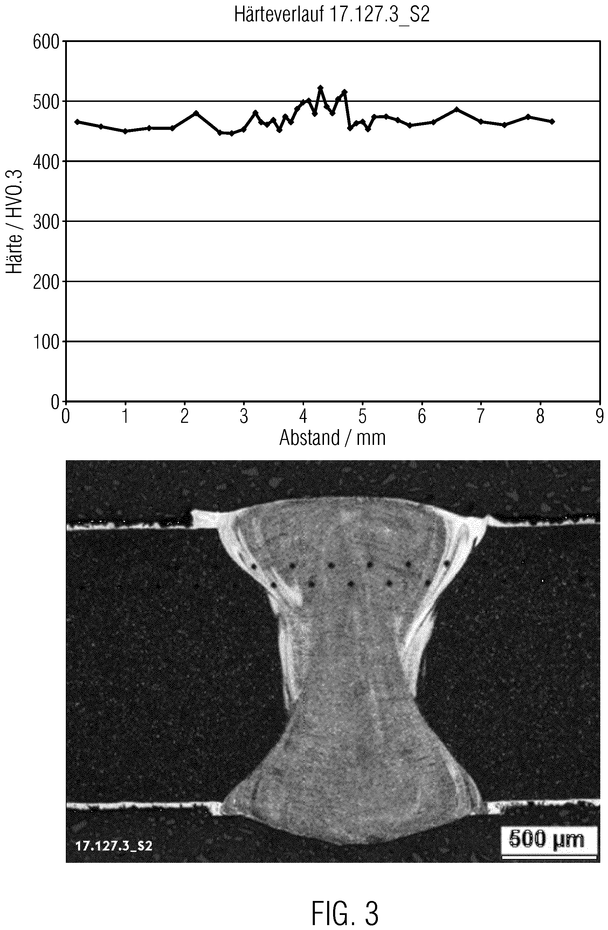

In Figur 3 erkennt man den Härteverlauf bei einem mit einem erfindungsgemäßen Fülldraht geschweißten Schweißnaht, wobei die Härteaufnahmepunkte in Figur 3 rechts zu sehen sind und der entsprechende Härteverlauf in Figur 3 links. Man erkennt, dass zwar geringe Schwankungen im Härteverlauf vorhanden sind, diese aber auf einem hohen Niveau sich bewegen und keinesfalls gegenüber den Randzonen oder dem Grundmaterial abfallen.

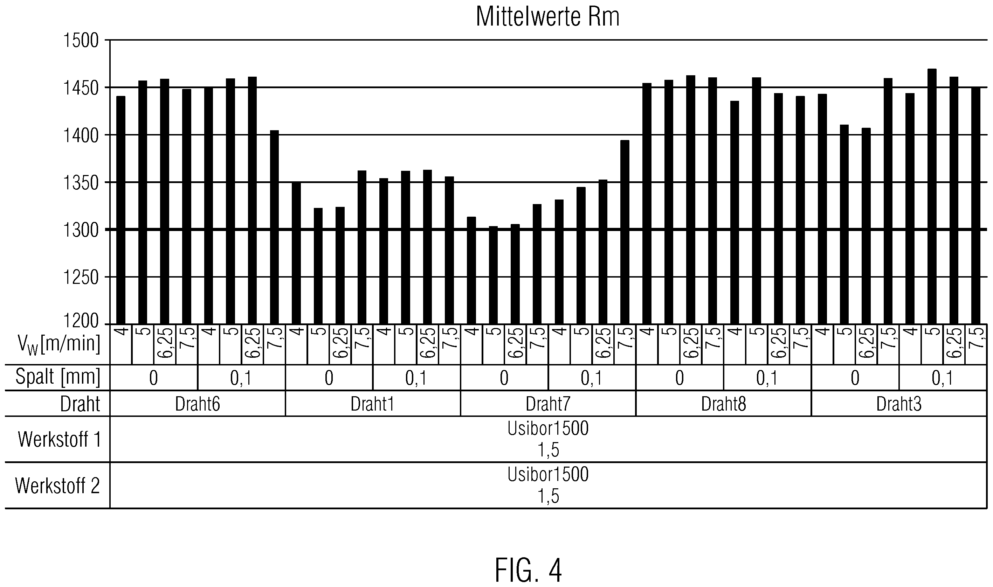

Figur 4 zeigt die Mittelwerte von Zugproben, wobei unterschiedliche Drahtmaterialien und unterschiedliche Fortschrittsgeschwindigkeiten sowie unterschiedliche Spaltbreiten eingesetzt wurden.

Die Drahtmaterialien 1 und 7 wurden hierbei als ungeeignet beurteilt, während die Drahtmaterialien 3, 6 und 8 die erfindungsgemäße Zusammensetzung aufweisen und über die gesamt Prozessbreite und die gesamten Prozessmöglichkeiten die geringste Schwankungsbreite besitzen.

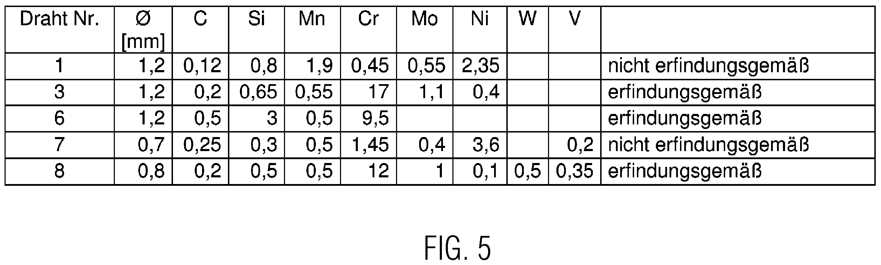

Bemerkenswert ist, dass die Mindestfestigkeit entsprechend der Spezifikation der meisten Anwender von den mit den erfindungsgemäßen Drahtmaterialien verschweißten Proben weit übertroffen werden. Die Drahtzusammensetzungen sind in Figur 5 zusammengefasst.

Als Drahtmaterial wurden folgenden Zusammensetzungen getestet (siehe Figur 5)

| Draht Nr. | Ø [mm] | C | Si | Mn | Cr | Mo | Ni | W | V | |
|---|---|---|---|---|---|---|---|---|---|---|
| 1 | 1,2 | 0,12 | 0,8 | 1,9 | 0,45 | 0,55 | 2,35 | | | nicht erfindungsgemäß |
| 3 | 1,2 | 0,2 | 0,65 | 0,55 | 17 | 1,1 | 0,4 | | | erfindungsgemäß |
| 6 | 1,2 | 0,5 | 3 | 0,5 | 9,5 | | | | | erfindungsgemäß |
| 7 | 0,7 | 0,25 | 0,3 | 0,5 | 1,45 | 0,4 | 3,6 | | 0,2 | nicht erfindungsgemäß |
| 8 | 0,8 | 0,2 | 0,5 | 0,5 | 12 | 1 | 0,1 | 0,5 | 0,35 | erfindungsgemäß |

Alle Werte in Masse-%, Rest Eisen und erschmelzungsbedingte unvermeidbare Verunreinigungen.

Die Drähte mit den Nummer 3, 6 und 8 zeigten dabei besonders günstige Eigenschaften, wobei allerdings das Bruchbild bzw. eine allfällige Anfälligkeit auf Sprödbruch sich aufgrund des etwas erhöhten Kohlenstoff- und Siliziumgehaltes beim Draht mit der Nummer 6 zeigte. Insgesamt waren die Ergebnisse jedoch bei all diesen Drähten als zufriedenstellend zu beurteilen.

Diese Ergebnisse der Festigkeitswerte sind wie zuvor erwähnt in Figur 4 dargestellt.

Bei der Erfindung ist von Vorteil, dass Aluminium-Silizium-beschichtete härtbare Stahlbleche, insbesondere aus einem härtbaren Bor-Manganstahl, ohne einen aufwendigen und nicht sicher zu beherrschenden Ablationsschritt miteinander verschweißt werden können ohne dass die Schweißnaht eine Schwächung darstellt.

**Patentansprüche**

1. Verfahren zum Verschweißen von Stahlblechen aus mit einer Aluminium-Siliziumkorrosionsschutzschicht beschichteten Stahlmaterialien, insbesondere im Abschreckhärteverfahren härtbaren CMnB und CMn-Stahlmaterialien, wobei beim Verschweißen der Bleche ein Schweißzusatzdraht verwendet wird, wobei der Schweißzusatzdraht aus folgender Zusammensetzung besteht:

C= (0,80 - 2,28) × %C Grundmaterial
Cr= 8 - 20%
Ni< 5%
Si= 0,2 - 3%
Mn= 0,2 - 1%
Mo= 0,5 - 2%

Optional V und/oder W in Summe < 1%
Rest Eisen und erschmelzungsbedingte unvermeidbare Verunreinigungen, wobei alle Angaben in Masse-% sind;
wobei als Grundmaterial ein Stahl der allgemeinen Legierungszusammensetzung in Masse-%:

| | |
|---|---|
| Kohlenstoff (C) | 0,03-0,6 |
| Mangan (Mn) | 0,3-3,0 |
| Aluminium (Al) | 0,01-0,07 |
| Silizium (Si) | 0,01-0,8 |
| Chrom (Cr) | 0,02-0,6 |
| Nickel (Ni) | <0,5 |
| Titan (Ti) | 0,01-0,08 |
| Niob (Nb) | <0,1 |
| Stickstoff (N) | < 0,02 |
| Bor (B) | < 0,02 |
| Phosphor (P) | < 0,01 |
| Schwefel (S) | < 0,01 |
| Molybdän (Mo) | < 1 |

Rest Eisen und erschmelzungsbedingte Verunreinigungen, verwendet wird.

2. Verfahren nach Anspruch 1, **dadurch gekennzeichnet, dass** ein Schweißdraht verwendet wird dessen Nickelgehalt unter 1 Masse-% liegt.

3. Verfahren nach einem der vorhergehenden Ansprüche, **dadurch gekennzeichnet, dass** die Bleche auf Stoß lasergeschweißt werden.

4. Verfahren nach einem der vorhergehenden Ansprüche, **dadurch gekennzeichnet, dass** der Schweißfortschritt 4 bis 15 m/min ist.

5. Verfahren nach einem der vorhergehenden Ansprüche, **dadurch gekennzeichnet, dass** Spaltbreiten von 0 bis 0,3 mm insbesondere 0 bis 0,1 mm eingestellt werden.

6. Verfahren nach einem der vorhergehenden Ansprüche, **dadurch gekennzeichnet, dass** der Kohlenstoffgehalt des Zusatzdrahtes mit

C= (0,88 bis 1,51) × % C Grundmaterial bevorzugt
C= (0,90 bis 1,26) × % C Grundmaterial besonders bevorzugt
C= (0,90 bis 1,17) × % C Grundmaterial eingestellt wird.

7. Verfahren nach einem der vorhergehenden Ansprüche,
**dadurch gekennzeichnet,**
**dass** als Grundmaterial ein Stahl verwendet wird, der ein Bor-Mangan-Stahl ist, welcher durch ein Austenitisierungs- und Abschreckverfahren auf besonders bevorzugt auf eine Zugfestigkeit von größer als 900 MPa härtbar ist verwendet wird.

8. Verfahren nach einem der vorhergehenden Ansprüche,
**dadurch gekennzeichnet,**

**dass** als Grundmaterial ein Stahl der allgemeinen Legierungszusammensetzung in Masse-%:

| | |
|---|---|
| Kohlenstoff (C) | 0,03-0,36 |
| Mangan (Mn) | 0,3-2,00 |
| Aluminium (Al) | 0,03-0,06 |
| Silizium (Si) | 0,01-0,20 |
| Chrom (Cr) | 0,02-0,4 |
| Nickel (Ni) | <0,5 |

(fortgesetzt)

| | |
|---|---|
| Titan (Ti) | 0,03-0,04 |
| Niob (Nb) | <0,1 |
| Stickstoff (N) | < 0,007 |
| Bor (B) | < 0,006 |
| Phosphor (P) | < 0,01 |
| Schwefel (S) | < 0,01 |
| Molybdän (Mo) | < 1 |

Rest Eisen und erschmelzungsbedingte Verunreinigungen, verwendet wird.

9. Verfahren nach einem der vorhergehenden Ansprüche,
   **dadurch gekennzeichnet,**
   **dass** als Grundmaterial ein Stahl der Legierungszusammensetzung C=0,22, Si=0,19, Mn=1,22, P=0,0066, S=0,001, Al=0,053, Cr=0,26, Ti=0,031, B=0,0025, N=0,0042, Rest Eisen und schmelzungsbedingte Verunreinigungen verwendet wird, wobei alle Angaben in Masse-% sind.

10. Verfahren nach einem der vorhergehenden Ansprüche, **dadurch gekennzeichnet, dass** der Zusatzdraht einen Kohlenstoffgehalt im Bereich von 0,024 bis 1,086 Masse-%, besonders bevorzugt 0,186 bis 0,5082 Masse-% noch besonderer bevorzugt zwischen 0,20 bis 0,257 Masse-% aufweist.

**Claims**

1. Method of welding steel sheets made of steel materials coated with an aluminium silicon corrosion protection layer, in particular CMnB and CMn steel materials hardenable by quench hardening, wherein a welding filler wire is used when welding the sheets, wherein the welding filler wire consists of the following composition:

| | |
|---|---|
| C= | (0.80 - 2.28) x %C base material |
| Cr= | 8 - 20% |
| Ni< | 5% |
| Si= | 0.2 - 3% |
| Mn= | 0.2 - 1% |
| Mo= | 0.5 - 2% |

optionally V and/or W in total < 1%
remainder iron and unavoidable smelting-related impurities, wherein all values are in wt%;
where a steel is used as base material of the general alloy composition in wt%:

| | |
|---|---|
| carbon (C) | 0.03-0.6 |
| manganese (Mn) | 0.3-3.0 |
| aluminum (Al) | 0.01-0.07 |
| silicon (Si) | 0.01-0.8 |
| chromium (Cr) | 0.02-0.6 |
| nickel (Ni) | <0.5 |
| titanium (Ti) | 0.01-0.08 |
| niobium (Nb) | <0.1 |
| nitrogen (N) | < 0.02 |
| boron (B) | < 0.02 |
| phosphorus (P) | < 0.01 |
| sulphur (S) | < 0.01 |
| molybdenum (Mo) | < 1 |

remainder iron and smelting-related impurities.

2. Method according to claim 1, **characterized in that** a welding wire is used whose nickel content is less than 1% by weight.

3. Method according to one of the preceding claims, **characterized in that** the sheets are laser welded together.

4. Method according to one of the preceding claims, **characterized in that** the welding progress is 4 to 15 m/min.

5. Method according to one of the preceding claims, **characterized in that** gap widths of 0 to 0.3 mm, in particular 0 to 0.1 mm, are set.

6. Method according to one of the preceding claims, **characterized in that** the carbon content of the filler wire is set at

   C= (0.88 to 1.51) x % C base material preferably
   C= (0.90 to 1.26) x % C base material particularly preferably
   C= (0.90 to 1.17) x % C base material.

7. Method according to one of the preceding claims,
   **characterized in that**
   the base material used is a steel which is a boron-manganese steel which can be hardened by an austenitizing and quenching process particularly preferably to a tensile strength of more than 900 MPa.

8. Method according to one of the preceding claims,
   **characterized in that**

   a steel is used as base material with the general alloy composition in wt%:

   | | |
   |---|---|
   | carbon (C) | 0.03-0.36 |
   | manganese (Mn) | 0.3-2.00 |
   | aluminium (Al) | 0.03-0.06 |
   | silicon (Si) | 0.01-0.20 |
   | chromium (Cr) | 0.02-0.4 |
   | nickel (Ni) | <0.5 |
   | titanium (Ti) | 0.03-0.04 |
   | niobium (Nb) | <0.1 |
   | nitrogen (N) | < 0.007 |
   | boron (B) | < 0.006 |
   | phosphorus (P) | < 0.01 |
   | sulphur (S) | < 0.01 |
   | molybdenum (Mo) | < 1 |

   remainder iron and smelting-related impurities.

9. Method according to one of the preceding claims,
   **characterized in that**
   that the base material used is a steel with the alloy composition C=0.22, Si=0.19, Mn=1.22, P=0.0066, S=0.001, Al=0.053, Cr=0.26, Ti=0.031, B=0.0025, N=0.0042, the remainder being iron and smelting-related impurities, wherein all values are in wt%.

10. Method according to one of the preceding claims, **characterized in that** the filler wire has a carbon content in the range of 0.024 to 1.086 wt%, particularly preferably 0.186 to 0.5082 wt%, even more preferably between 0.20 to 0.257 wt%.

**EP 3 774 167 B1**

**Revendications**

1. Procédé de soudage de plaques d'acier en matériaux d'acier revêtus d'une couche de protection contre la corrosion en aluminium-silicium, en particulier de matériaux d'acier CMnB et CMn durcissables par un procédé de trempe, dans lequel un fil d'apport de soudage est utilisé lors du soudage des plaques, le fil d'apport de soudage étant constitué de la composition suivante :

C= (0,80 - 2,28) x %C matériau de base
Cr=8-20%
Ni< 5 %
Si= 0,2 - 3 %
Mn= 0,2 - 1 %
Mo= 0,5 - 2 %

Optionnel V et/ou W au total < 1 %
le reste étant du fer et des impuretés inévitables dues à la fusion, toutes les données étant exprimées en % en masse ;
le matériau de base en acier de la composition générale de l'alliage, en % en masse :

| Carbone (C) | 0,03-0,6 |
| Manganèse (Mn) | 0,3-3,0 |
| Aluminium (Al) | 0,01-0,07 |
| Silicium (Si) | 0,01-0,8 |
| Chrome (Cr) | 0,02-0,6 |
| Nickel (Ni) | <0,5 |
| Titane (Ti) | 0,01-0,08 |
| Niobium (Nb) | <0,1 |
| Azote (N) | < 0,02 |
| Bore (B) | < 0,02 |
| Phosphore(P) | < 0,01 |
| Soufre (S) | < 0,01 |
| Molybdène (Mo) | < 1 |

étant utilisé, le reste étant du fer et des impuretés dues à la fusion.

2. Procédé selon la revendication 1, **caractérisé en ce qu'**un fil de soudage est utilisé dont la teneur en nickel est inférieure à 1 % en masse.

3. Procédé selon l'une des revendications précédentes, **caractérisé en ce que** les plaques sont soudées au laser bout à bout.

4. Procédé selon l'une des revendications précédentes, **caractérisé en ce que** la progression de la soudure est de 4 à 15 m/min.

5. Procédé selon l'une des revendications précédentes, **caractérisé en ce que** des largeurs de fente de 0 à 0,3 mm sont réglées, en particulier de 0 à 0,1 mm.

6. Procédé selon l'une des revendications précédentes, **caractérisé en ce que** la teneur en carbone du fil d'apport est réglée avec

C= (0,88 à 1,51) x % C matériau de base de préférence
C= (0,90 à 1,26) x % C matériau de base particulièrement préférable
C= (0,90 à 1,17) x % C matériau de base.

7. Procédé selon l'une des revendications précédentes,
**caractérisé**
**en ce qu'**un acier est utilisé comme matériau de base, acier qui est un acier au bore et au manganèse, qui peut être trempé par un procédé d'austénitisation et de trempe jusqu'à une résistance à la traction particulièrement préférable de plus de 900 MPa.

8. Procédé selon l'une des revendications précédentes,
**caractérisé**

      **en ce que** le matériau de base en acier de la composition générale de l'alliage en % en masse :

| | |
|---|---|
| Carbone © | 0,03-0,36 |
| Manganèse (Mn) | 0,3-2,00 |
| Aluminium (Al) | 0,03-0,06 |
| Silicium (Si) | 0,01-0,20 |
| Chrome (Cr) | 0,02-0,4 |
| Nickel (Ni) | <0,5 |
| Titane (Ti) | 0,03-0,04 |
| Niobium (Nb) | <0,1 |
| Azote (N) | < 0,007 |
| Bore (B) | < 0,006 |
| Phosphore(P) | < 0,01 |
| Soufre (S) | < 0,01 |
| Molybdène (Mo) | < 1 |

      étant utilisé, le reste étant du fer et des impuretés dues à la fusion.

9. Procédé selon l'une des revendications précédentes,
**caractérisé**
**en ce qu'**est utilisé comme matériau de base un acier de composition d'alliage C=0,22, Si=0,19, Mn=1,22, P=0,0066, S=0,001, Al=0,053, Cr=0,26, Ti=0,031, B=0,0025, N=0,0042, le reste étant du fer et des impuretés dues à la fusion, toutes les indications étant en % en masse.

10. Procédé selon l'une des revendications précédentes, **caractérisé en ce que** le fil d'apport présente une teneur en carbone comprise entre 0,024 et 1,086 % en masse, particulièrement préférable entre 0,186 et 0,5082 % en masse, encore plus particulièrement préférable entre 0,20 et 0,257 % en masse.

FIG. 1

FIG. 2

Härteverlauf 17.127.3_S2

FIG. 3

## Mittelwerte Rm

| Vw[m/min] | 4 | 5 | 6,25 | 7,5 | 4 | 5 | 6,25 | 7,5 | 4 | 5 | 6,25 | 7,5 | 4 | 5 | 6,25 | 7,5 | 4 | 5 | 6,25 | 7,5 | 4 | 5 | 6,25 | 7,5 | 4 | 5 | 6,25 | 7,5 | 4 | 5 | 6,25 | 7,5 | 4 | 5 | 6,25 | 7,5 | 4 | 5 | 6,25 | 7,5 |
|---|---|---|---|---|---|---|---|---|---|---|---|---|---|---|---|---|---|---|---|---|---|---|---|---|---|---|---|---|---|---|---|---|---|---|---|---|---|---|---|---|
| Spalt [mm] | 0 | | | | 0,1 | | | | 0 | | | | 0,1 | | | | 0 | | | | 0,1 | | | | 0 | | | | 0,1 | | | | 0 | | | | 0,1 | | | |
| Draht | Draht6 | | | | | | | | Draht1 | | | | | | | | Draht7 | | | | | | | | Draht8 | | | | | | | | Draht3 | | | | | | | |
| Werkstoff 1 | Usibor1500 1,5 | | | | | | | | | | | | | | | | | | | | | | | | | | | | | | | | | | | | | | | |
| Werkstoff 2 | Usibor1500 1,5 | | | | | | | | | | | | | | | | | | | | | | | | | | | | | | | | | | | | | | | |

FIG. 4

| Draht Nr. | Ø [mm] | C | Si | Mn | Cr | Mo | Ni | W | V | |
|---|---|---|---|---|---|---|---|---|---|---|
| 1 | 1,2 | 0,12 | 0,8 | 1,9 | 0,45 | 0,55 | 2,35 | | | nicht erfindungsgemäß |
| 3 | 1,2 | 0,2 | 0,65 | 0,55 | 17 | 1,1 | 0,4 | | | erfindungsgemäß |
| 6 | 1,2 | 0,5 | 3 | 0,5 | 9,5 | | | | | erfindungsgemäß |
| 7 | 0,7 | 0,25 | 0,3 | 0,5 | 1,45 | 0,4 | 3,6 | | 0,2 | nicht erfindungsgemäß |
| 8 | 0,8 | 0,2 | 0,5 | 0,5 | 12 | 1 | 0,1 | 0,5 | 0,35 | erfindungsgemäß |

FIG. 5

**EP 3 774 167 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012111118 B3
- DE 102014001979 A1
- EP 2737971 A1
- EP 1878531 B1
- EP 2942143 B1
- EP 2883646 B1
- EP 2007545 B1
- US 9604311 B2
- WO 2017103149 A1